# EUROPÄISCHE PATENTANMELDUNG

(11) **EP 2 733 679 A2**
(43) Veröffentlichungstag der Anmeldung: **21.05.2014**
(21) Anmeldenummer: 13191884.9
(22) Anmeldetag: 07.11.2013
(51) Int. Cl.: G07C 5/00, G07C 5/08

(54) **Vorrichtung zur Kontrolle der Laufleistung eines Kraftfahrzeugs**

(30) Priorität: 16.11.2012 DE 202012104439 U
(71) Anmelder: Schwanhäuser, Thomas Dominik, 60327 Frankfurt am Main (DE)
(72) Erfinder: Schwanhäuser, Thomas Dominik, 60327 Frankfurt am Main (DE)
(74) Vertreter: Meyer-Dulheuer, Karl-Hermann

(57) **Zusammenfassung**

Es wird eine Vorrichtung zur Kontrolle der Laufleistung eines Kraftfahrzeuges beschrieben, bestehend aus mindestens folgenden Komponenten:
- System zur Messung einer Wegstrecke eines Kraftfahrzeugs, welches in einem Kraftfahrzeug integriert ist,
- in das Kraftfahrzeug integriertes Kommunikationssystem zur drahtlosen Datenübertragung, welches mit Hilfe einer eindeutigen Identifikationsnummer des Kraftfahrzeugs identifizierbar ist und Daten vom Fahrzeug an einen Empfänger übermitteln kann,
- stationäres Datenbanksystem zum Speichern und Bereitstellen von Daten, welches mit einem Empfänger ausgestattet ist, der eine Kommunikation mit dem im Fahrzeug integrierten Kommunikationssystem ermöglicht,
- Schnittstelle, die es stationären und mobilen Kommunikationsendsystemen erlaubt, unter Eingabe der dem Kraftfahrzeug zugeordneten Identifikationsnummer kraftfahrzeugspezifische Informationen aus dem stationären Datenbanksystem abzurufen.

## Beschreibung

Bei der vorliegenden Erfindung handelt es sich um ein System, das dazu dient, der Manipulation von Kilometerzählern entgegenzuwirken. Zu diesem Zweck wird der Kilometerzähler eines Fahrzeugs mit einem im Fahrzeug integrierten Kommunikationssystem verbunden, das die hierbei gemessenen Informationen an ein stationäres Datenbanksystem verschickt. Über das Internet können diese Informationen vom Datenbanksystem abgefragt werden, um den Kilometerzählerverlauf überprüfen zu können.

Um die Manipulation von Kilometerzählern zu verhindern, kennt der Stand der Technik im Wesentlichen den Ansatz, die Fälschungssicherheit des Kilometerzählers an sich zu verbessern. Hierzu ist es beispielsweise möglich, die Hardware des Kilometerzählers durch besondere physikalische Maßnahmen besser abzuschirmen, beispielsweise durch ein bruchsicheres Gehäuse. Gegen Softwaremanipulation schützt die Verwendung eines sogenannten Trusted Platform Module (TPM). Bei den genannten Methoden besteht der Nachteil darin, dass der Kilometerzähler trotzdem manipulierbar bleibt, da ein physikalischer Zugriff auf das Gerät möglich ist. Somit besteht ein anhaltender Wettlauf zwischen der Automobilindustrie, welche die Geräte fälschungssicherer gestaltet, und Angreifern, die ständig neue Wege finden, um diese Abwehrmaßnahmen zu umgehen.

Der Stand der Technik kennt weiterhin diverse Methoden zur Führung von elektronischen Fahrtenbüchern. Die DE 100 08 352 A1 und die DE 199 23 060 A1 beschreiben Systeme, die Fahrtdaten messen und diese per drahtloser Verbindung übertragen. Außerdem wird die Möglichkeit geboten, den Fahrer des Kraftfahrzeugs zu identifizieren. Dadurch wird die Führung eines elektronischen Fahrtenbuchs möglich, das sich außerhalb des Fahrzeugs befindet. Hier ist jedoch keine Möglichkeit explizit gegeben, um den Kilometerzählerverlauf eines beliebigen Kraftfahrzeugs abzurufen. Die Identifizierung ist an den Fahrer gebunden, nicht aber an das Kraftfahrzeug selbst.

Die DE 20 2008 03 beschreibt ein System, das per Mobilfunkverbindung Positionsdaten eine Fahrzeugs überträgt. Allerdings birgt dieses Verfahren ebenfalls das Problem, dass die Identifizierung nicht an das Kraftfahrzeug gebunden ist. Hier wird die Identifizierung über das Mobilfunkgerät durchgeführt, das sich gegebenenfalls auswechseln lässt. Außerdem werden die Positionsdaten per GPS ermittelt - die hieraus gewonnenen Fahrtdaten stimmen aufgrund der inhärenten Ungenauigkeit von GPS-Systemen nicht exakt mit der per Kilometerzähler gemessenen Strecke überein.

Aufgabe der vorliegenden Erfindung ist die Bereitstellung eines Systems, das es erlaubt, den in einem Kraftfahrzeug aufgenommenen Kilometerstand auf seine Plausibilität zu überprüfen. Das System soll es zu diesem Zweck erlauben, den Kilometerzählerverlauf aufzuzeichnen und ausgewählten Personen verfügbar zu machen. Hierbei ist es von besonderer Wichtigkeit, dass der Zugang zu den entsprechenden Daten komfortabel möglich ist. Der Zugang zu den Daten soll nur ermöglicht werden, insofern man eine spezielle Identifikationsnummer des zu überprüfenden Fahrzeugs kennt. Die Sicherheit der Kilometerzählerdaten soll gewährleistet werden, sodass ein Zugriff durch Dritte unterbunden wird. Weiterhin soll sichergestellt werden, dass die verfügbar gemachten Kilometerzählerdaten tatsächlich in den entsprechenden Kraftfahrzeugen erhoben wurden. Die lückenlose Dokumentation des Kilometerzählerverlaufs soll stets gewährleistet sein.

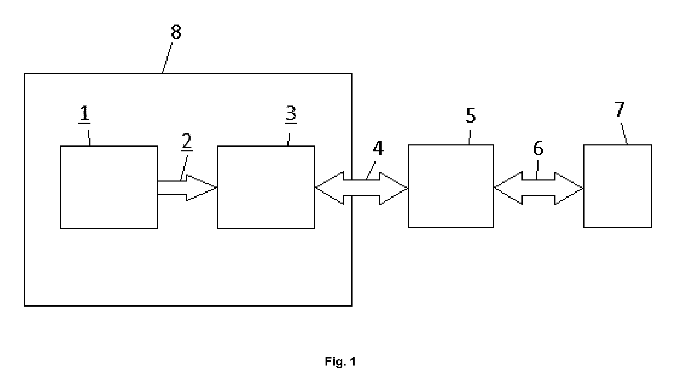

Gelöst wird die Aufgabe durch das System gemäß Anspruch 1, siehe auch Fig. 1. In einem Kraftfahrzeug (8) sind ein Kommunikationssystem (3) sowie ein Kilometerzähler (1), implementiert als Hodometer, integriert. Kilometerzähler und Kommunikationssystem sind miteinander über eine Datenleitung (2) verbunden, sodass der Kilometerzähler den gemessenen Kilometerstand an das Kommunikationssystem überträgt. Das Kommunikationssystem wiederum überträgt die Daten per Funkstrecke (4) an ein Datenbanksystem (5). Das Datenbanksystem macht die durch den Kilometerzähler gemessenen Daten Nutzern verfügbar, die mit einem stationären oder mobilen Endgerät (7) über eine Datenschnittstelle (6), die beispielsweise in Form einer Internetverbindung realisiert wird, darauf zugreifen können.

Die im Datenbanksystem (5) gespeicherten Fahrstreckeninformationen lassen sich jeweils genau einem Kraftfahrzeug (8) zuordnen. Dies wird dadurch bewerkstelligt, dass jedes Kraftfahrzeug (8) einer eindeutigen Identifikationsnummer zugeordnet ist. Als Identifikationsnummer kann die Fahrgestellnummer bzw. Fahrzeug-Identifizierungsnummer verwendet werden. Idealerweise ist die Identifikationsnummer dem Motor des Kraftfahrzeugs (8) zugeordnet und auch darauf vermerkt. Dies ist zweckmäßig, da es der vorrangige Zweck der Überprüfung des Kilometerzählerstands ist, dass die Abnutzung des Motors bestimmt wird. Will beispielsweise ein potentieller Käufer die Kilometerzählerdaten auslesen, lässt er sich die Identifikationsnummer des Kraftfahrzeugs (8) geben und überprüft sie gegebenenfalls selbst am Kraftfahrzeug (8). Mittels eines stationären oder mobilen Endgeräts (7) kann der Käufer nun auf das Datenbanksystem (5) zugreifen und die Kilometerzählerdaten des Kraftfahrzeugs (8) abfragen. Dies lässt sich dadurch realisieren, dass in das Datenbanksystem (5) die Funktionalität eines Webservers integriert ist. Als stationäres oder mobiles Endgerät (7) kann ein herkömmlicher PC beziehungsweise ein Mobilfunkgerät mit Internetverbindung eingesetzt werden.

In einer besonders vorteilhaften Ausprägung der erfindungsgemäßen Vorrichtung handelt es sich bei dem in das Kraftfahrzeug integrierten Kommunikationssystem (3) um ein Mobilfunkgerät. Durch eine flächendeckende Verbreitung des Mobilfunknetzes kann sichergestellt werden, dass die Datenübertragung an fast jedem Standort möglich ist. Das Kommunikationsgerät (3) erlaubt es, ein Intervall festzulegen, in dem die aktuellen Fahrwegdaten aufzunehmen sind. Es lässt sich bemessen entweder nach der Zeit, die während des Intervalls vergehen muss oder aber nach einer festgelegten Kilometerzahl, die das Kraftfahrzeug (8) währenddessen zurücklegen muss. Umso kleiner das Intervall gewählt wird, umso genauer lässt sich der Kilometerzählerverlauf nachvollziehen und umso besser lässt sich eine Plausibilitätsprüfung der diesbezüglichen Daten durchführen.

Falls ein Versenden der Daten an das Datenbanksystem (5) nicht möglich ist, beispielsweise weil sich das Kraftfahrzeug in einem Funkloch befindet, müssen die Fahrwegdaten zwischengespeichert werden. Deshalb besitzt das Kommunikationssystem (3) einen Datenspeicher, der eine hinreichende Menge von Messwerten aufnehmen kann. Sobald das Funknetz wieder verfügbar ist, können die aufgenommenen Fahrwege an das Datenbanksystem (5) übermittelt werden. Es kann auch zweckmäßig sein, ein größeres Intervall zum Versand der Daten zu wählen, um die Kosten der Datenübertragung zu verringern.

Die aufgenommenen Kilometerzählerdaten könnten persönliche Informationen über den Fahrer des Kraftfahrzeugs (8) offenlegen, die dieser nicht preisgeben möchte. Auch aus diesem Grund kann es hilfreich sein, ein größeres Intervall für die Aufnahme der Fahrtstrecke zu wählen. Bei einem ausreichend großen Intervall lassen die Daten nur schwer Rückschlüsse auf beispielsweise das Fahrverhalten ziehen. Dadurch, dass die Identifikation nur an das Kraftfahrzeug (8), nicht aber an den Fahrer gebunden ist, lassen sich Personen nicht unmittelbar den aufgenommenen Datensätzen zuordnen. Trotzdem ist es von Wichtigkeit, die übermittelten Daten zu schützen, sodass nur diejenigen tatsächlich darauf zugreifen können, die in Besitz der entsprechenden Identifikationsnummern sind. Deshalb ist ein erfindungsgemäßes System als besonders vorteilhaft anzusehen, wenn das Kommunikationssystem (3) dazu in der Lage ist, die zu übertragenden Daten zu verschlüsseln. Dies kann mittels eines symmetrischen Verschlüsselungsalgorithmus durchgeführt werden, geeignet hierzu ist beispielsweise ein Algorithmus entsprechend dem Advanced Encryption Standard (AES). Außerdem ist es sehr vorteilhaft, wenn sich sicherstellen lässt, dass versandte Informationen tatsächlich von dem betreffenden Kommunikationssystem (3) stammen. Dazu muss sich das Kommunikationssystem (3) authentifizieren. Eine Möglichkeit besteht hierzu darin, dass das Kommunikationsgerät (3) mit dem aktuellen Kilometerstand jeweils den zuletzt aufgenommenen Kilometerstand verschickt. Da bei einer sicheren Kommunikation nur das Kommunikationsgerät (3) über diese Information verfügen kann, wird seine Identität durch dieses Verfahren sichergestellt. Stehen ausreichende Systemressourcen zur Verfügung, kann alternativ zur Authentifizierung auch ein kryptographisches Verfahren verwendet werden. Hierzu würde sich beispielsweise ein Challenge-Response-Verfahren eignen, das auf Basis des Rivest-Shamir-Adleman-Kryptosystems (RSA) implementiert ist.

Das Kommunikationssystem (3) überträgt die Fahrweginformationen an ein Datenbanksystem, welches an eine Datenschnittstelle (6) wie beispielsweise das Internet angeschlossen ist. Das Datenbanksystem (5) speichert die erhaltenen Fahrweginformationen ab. Im Idealfall kann es sicherstellen, dass die Daten nach ihrer Speicherung nicht mehr verändert werden können. Um die Integrität der Daten später überprüfen zu können, werden diese mit einer Prüfsumme versehen.

Benutzer können entweder mit einem stationären oder einem mobilen Kommunikationsendgerät (7) auf das System zugreifen und sich Fahrweginformationen anzeigen lassen, insofern sie über die entsprechende Identifikationsnummer verfügen. Idealerweise ist das Datenbanksystem (5) dazu in der Lage, den Kilometerverlauf in einer grafischen Form anzuzeigen, sodass sich dieser leicht nachvollziehen lässt. Aus Sicherheitsgründen sollen Benutzer dazu in der Lage sein, sicherzustellen, dass sie mit dem korrekten Datenbanksystem (5) kommunizieren. Deshalb ist das Datenbanksystem (5) durch ein digitales Zertifikat gesichert, beispielsweise nach dem Standard X.509.

### Bezugszeichenliste

- **1**: Kilometerzähler
- **2**: Datenleitung
- **3**: Kommunikationssystem
- **4**: Funkstrecke
- **5**: Datenbanksystem
- **6**: Datenschnittstelle
- **7**: Mobiles oder stationäres Kommunikationsendgerät
- **8**: Kraftfahrzeug

## Patentansprüche

1. Vorrichtung zur Kontrolle der Laufleistung eines Kraftfahrzeugs, bestehend aus mindestens folgenden Komponenten:
- System zur Messung einer Wegstrecke eines Kraftfahrzeugs, welches in einem Kraftfahrzeug integriert ist,
- in das Kraftfahrzeug integriertes Kommunikationssystem zur drahtlosen Datenübertragung, welches mit Hilfe einer eindeutigen Identifikationsnummer des Kraftfahrzeugs identifizierbar ist und Daten vom Fahrzeug an einen Empfänger übermitteln kann,
- stationäres Datenbanksystem zum Speichern und Bereitstellen von Daten, welches mit einem Empfänger ausgestattet ist, der eine Kommunikation mit dem im Fahrzeug integrierten Kommunikationssystem ermöglicht,
- Schnittstelle, die es stationären und mobilen Kommunikationsendsystemen erlaubt, unter Eingabe der dem Kraftfahrzeug zugeordneten Identifikationsnummer kraftfahrzeugspezifische Informationen aus dem stationären Datenbanksystem abzurufen.

2. Vorrichtung gemäß dem Anspruch 2, **dadurch gekennzeichnet, dass** das im Kraftfahrzeug verbaute System zur Messung der Wegstrecke die Wegstrecke mittels eines Hodometers aufnimmt.

3. Vorrichtung gemäß dem Anspruch 1 oder 2, **dadurch gekennzeichnet, dass** das System zur Messung der Wegstrecke einen Speicher enthält, in dem es die aufgenommene Wegstrecke zu einem individuell einstellbaren Zeit- und/oder Streckenintervall abspeichert.

4. Vorrichtung gemäß einem der Ansprüche 1 bis 3, **dadurch gekennzeichnet, dass** das im Kraftfahrzeug integrierte Kommunikationssystem mithilfe von Mobilfunktechnologie implementiert ist.

5. Vorrichtung gemäß einem der Ansprüche 1 bis 4, **dadurch gekennzeichnet, dass** das Kommunikationssystem auf den Speicher des Systems zur Messung der Wegstrecke zugreifen kann.

6. Vorrichtung gemäß einem der Ansprüche 1 bis 5, **dadurch gekennzeichnet, dass** das Kommunikationssystem eine verschlüsselte Datenübertragung ermöglicht und sich eindeutig authentifizieren kann.

7. Vorrichtung gemäß einem der Ansprüche 1 bis 6, **dadurch gekennzeichnet, dass** im Kommunikationssystem die verschlüsselte Datenübertragung mittels AES implementiert ist und die sichere Authentifizierung mittels eines Challenge-Response-Mechanismus unter Verwendung von RSA implementiert ist.

8. Vorrichtung gemäß einem der Ansprüche 1 bis 7, **dadurch gekennzeichnet, dass** das stationäre Datenbanksystem mit dem Kommunikationssystem kommuniziert und in der Lage ist, eine verschlüsselte Verbindung zum Kommunikationssystem aufzubauen und dessen Identität mittels Authentifizierung sicherzustellen.

9. Vorrichtung gemäß einem der Ansprüche 1 bis 8, **dadurch gekennzeichnet, dass** das Datenbanksystem für jedes Kommunikationssystem einen Datensatz vorhält, welcher der eindeutigen Identifikationsnummer des Kraftfahrzeugs zugeordnet ist und zum Speichern der Daten des Kommunikationssystem verwendet wird.

10. Vorrichtung gemäß einem der Ansprüche 1 bis 9, **dadurch gekennzeichnet, dass** das Kommunikationssystem in einem festgelegten Zeit- und/oder Streckenintervall die aufgenommene Wegstrecke an das Datenbanksystem überträgt.

11. Vorrichtung gemäß einem der Ansprüche 1 bis 10, **dadurch gekennzeichnet, dass** das System es unterbindet, dass gespeicherte Wegstreckeninformationen verändert werden, wobei die Integrität der Daten durch eine Prüfsumme sichergestellt wird.

12. Vorrichtung gemäß einem der Ansprüche 1 bis 11, **dadurch gekennzeichnet, dass** durch das Datenbanksystem die aufgenommene Wegstrecke des Fahrzeugs anhand der Identifikationsnummer durch eine Schnittstelle an ein Netzwerk zugänglich macht.

13. Vorrichtung gemäß einem der Ansprüche 1 bis 12, **dadurch gekennzeichnet, dass** das Datenbanksystem die dem Kommunikationssystem zugeordnete Wegstrecke über ein grafisches Interface verfügbar macht und sich Nutzern gegenüber sicher authentifizieren kann.

14. Vorrichtung gemäß einem der Ansprüche 1 bis 13, **dadurch gekennzeichnet, dass** das Datenbanksystem die einer Identifikationsnummer zugeordnete Wegstrecke rechtssicher signiert.
